# EUROPEAN PATENT SPECIFICATION

(11) **EP 4 712 514 B1**
(45) Date of publication and mention of the grant of the patent: **19.08.2026**
(21) Application number: 24200672.4
(22) Date of filing: 16.09.2024
(51) Int. Cl.: H04W 4/02, G01S 7/41

(54) **METHOD FOR SENSING IN A MOBILE COMMUNICATION NETWORK**
VERFAHREN ZUR ERFASSUNG IN EINEM MOBILEN KOMMUNIKATIONSNETZWERK
PROCÉDÉ DE DÉTECTION DANS UN RÉSEAU DE COMMUNICATION MOBILE

(43) Date of publication of application: 18.03.2026
(73) Proprietor: Deutsche Telekom AG, 53113 Bonn (DE)
(72) Inventor: KADELKA, Arndt, 50933 Cologne (DE)
(74) Representative: Schwöbel, Thilo K.

(56) References cited:
- WO-A1-2024/163007
- US-A1- 2022 191 819
- US-A1- 2022 327 360

## Description

### BACKGROUND

The present invention relates a method for providing at least one sensing-related service and/or for generating training data and/or sensing model data by means of processing sensing-related data that is generated within or as part of a mobile communication network, wherein the mobile communication network comprises at least a sensing function and a positioning function, wherein, as part of the sensing function, the mobile communication network comprises a sensing-capable or sensing-enabled entity or functionality, wherein the sensing-capable or sensing-enabled entity or functionality performs sensing by means of receiving radiofrequency sensing reception signals based on which information is able to be obtained about an area related to, or in the vicinity of, the sensing-capable sensing-enabled entity or functionality.

Furthermore, the present invention relates to a system or to a mobile communication network for providing at least one sensing-related service and/or for generating training data and/or sensing model data by means of processing sensing-related data that is generated within or as part of a mobile communication network, wherein the mobile communication network comprises at least a sensing function and a positioning function, wherein, as part of the sensing function, the mobile communication network comprises a sensing-capable or sensing-enabled entity or functionality, wherein the sensing-capable or sensing-enabled entity or functionality performs sensing by means of receiving radiofrequency sensing reception signals based on which information is able to be obtained about an area related to, or in the vicinity of, the sensing-capable sensing-enabled entity or functionality.

Furthermore, the present invention relates to a sensing-capable or sensing-enabled entity or functionality of a mobile communication network, especially base station entity of the mobile communication network, or sensing management function for providing at least one sensing-related service and/or for generating training data and/or sensing model data by means of processing sensing-related data that is generated within or as part of the mobile communication network that comprises at least a sensing function comprising the sensing-capable or sensing-enabled entity or functionality, and a positioning function, wherein the sensing-capable or sensing-enabled entity or functionality performs sensing by means of receiving radiofrequency sensing reception signals based on which information is able to be obtained about an area related to, or in the vicinity of, the sensing-capable sensing-enabled entity or functionality.

Furthermore, the present invention relates to a program and to a computer-readable medium for providing at least one sensing-related service and/or for generating training data and/or sensing model data according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

By means of realizing sensing capabilities in or as part of mobile communication networks, primarily by means of one or a plurality of sensing-capable or sensing-enabled entities or functionalities that are generating and transmitting radiofrequency sensing signals, it is possible to obtain information regarding either transmission channel properties between different stations, especially base station entities or user equipments, and/or regarding objects from where such radiofrequency sensing signals are reflected.

Future advances in mobile communications (5G Advanced and 6G) anticipate that advanced radio sensing functions will become important services of mobile broadband (radio) networks. Joint communication and sensing (JCaS) and/or integrated communication and sensing (ICaS) will address a combined radio interface serving both, communication and sensing.

Customarily, object detection is characterized by various metrics: the precision of the object detection, such as the probability that a detected object is a real object, the recall of the object detection, such as the probability that all real objects have been detected, the accuracy of the object detection, such as the degree to which the location of the real object has been predicted, the classification of the identified object, such as the identity of the identified object, ex. consisting of pedestrian, cyclist, car, cat, dog, etc., and tracking of object detection, such as maintaining positions of a single object over time.

Mobile positioning solutions utilize an active mobile device to obtain positioning information. Example of such devices are Global positioning systems, UWB positioning systems, and 5G positioning systems. With such devices, the classification of the detected object is already performed, since it is already known at the time of performing position which object, and its type, is linked to the utilized mobile device.

Sensing systems aim to derive positioning information from radio measurements of passive objects. For example, radar systems illuminate the environment and infer object information from signal reflections. Such systems perform at least detection and localization, and possibly identify all indicators of the detection.

3GPP 5G-Advanced intends to combine communication services, capable of obtain positioning information, with sensing (an "Integrated Communication and Sensing" solution, ICaS). 6G intends to combine both functions by using an underlaying physical radio system (a "Joint Communication and Sensing" solution, JCaS).

A possible approach to solve object sensing challenges and other sensing tasks in ICaS and JCaS systems is to apply artificial intelligence and machine learning (Al/ML) for this purpose. State-of-the-art machine learning/deep learning techniques provide promising results, but rely heavily on annotated/labeled data obtained during training. The efficient application of these techniques is hindered by the lack of available ICaS/JCaS training data, such as ground truth information on object location and classes.

Current solutions rely on data obtained from another, mainly dedicated positioning system to derive ground truth location of objects. Cars may be equipped with a real-time kinematic positioning (RTK) system to obtain the ground truth data for localization, while cameras are used for video-based object classification. However, these approaches are cumbersome and require huge computational effort. This solution might be feasible for obtaining initial training data, but cannot be efficiently applied during normal operation.

US 2022/327360 A1 discloses a solution where a sensing distributed system, in access points of a WiFi network, receives labelling data for the training of the sensing model from labelling devices that can be wireless user equipment.

### SUMMARY

An object of the present invention is to provide a technically simple, efficient and cost-effective solution for providing ground truth data for object detection in order to provide at least one sensing-related service and/or for generating training data and/or sensing model data by means of processing sensing-related data that is generated within or as part of a mobile communication network. A further object of the present invention is to provide a corresponding system or mobile communication network, a corresponding sensing-capable or sensing-enabled entity or functionality, especially base station entity of the mobile communication network, or sensing management function, and a corresponding program and computer-readable medium.

The object of the present invention is achieved by a method for providing at least one sensing-related service and/or for generating training data and/or sensing model data as defined in claim 1.

It is thereby advantageously possible according to the present invention to be able to obtain ground truth data for object detection - especially for labelling - in order to provide at least one sensing-related service and/or for generating training data and/or sensing model data by means of processing sensing-related data that is generated within or as part of a mobile communication network.

Also, the solution proposed by the present invention links the 3GPP architecture functions for both communication/positioning and sensing. In accordance with this solution, sensing object detection occurs internally while making use of data provided by 3GPP positioning functions (or communication functions) during operation. As such, no dedicated positioning system is needed to obtain ground truth data for labeling, providing therefore a technically simpler configuration and modality for obtaining ground truth data.

Machine learning/deep learning techniques may be as well efficiently applied since training data is available ICaS/JCaS, such as ground truth information on object location and classes.

According to the present invention, at least one sensing-related service is able to be provided and/or training and/or sensing model data are able to be generated by means of processing sensing-related data that is generated within or as part of a mobile communication network, i.e. wherein at least a part or parts of the mobile communication network help to generate such sensing-related data.
According to the present invention, this is able to be realized by means of at least a first sensing-capable or sensing-enabled entity or functionality and a second sensing-capable or sensing-enabled entity or functionality. These sensing-capable or sensing-enabled entities or functionalities are typically base station entities that are used, within or as part of the mobile communication network, for communication purposes, i.e. in order to provide communication services (and especially radio coverage) to user equipments. However, also user equipments might be used, or participate, according to the present invention, in generating sensing-related data; hence, sensing-capable or sensing-enabled entities or functionalities might also correspond to user equipments.
According to the present invention, sensing relates to obtaining information regarding the environment of such a sensing-capable or sensing-enabled entity or functionality by means of using (and analyzing) incoming radiofrequency signals (sensing reception signals) that are the result of the interactions (especially reflections) of previously transmitted radiofrequency signals (sensing signals) with the environment (e.g. objects having the capability to reflect radiofrequency signals) of the sensing-capable or sensing-enabled entity or functionality, wherein the previously transmitted radiofrequency signals (sensing signals) could either be radiofrequency signals having been transmitted by the same sensing-capable or sensing-enabled entity or functionality, or radiofrequency signals (sensing signals) having been transmitted by another sensing-capable or sensing-enabled entity or functionality, or both. Hence, the at least one sensing-capable or sensing-enabled entity or functionality transmits a radiofrequency sensing signal, wherein, as a result of the radiofrequency sensing signal being transmitted, a radiofrequency sensing reception signal is received by either the (same) first sensing-capable or sensing-enabled entity or functionality or the second sensing-capable or sensing-enabled entity or functionality (or by both of them). By means of the radiofrequency sensing reception signal (or plurality of such sensing reception signals), information is able to be gathered (especially by means of at least initially processing such sensing reception signal(s)) about the environment of the first and/or second sensing-capable or sensing-enabled entities or functionalities by means of inferring sensing inference data based on training data or training procedures or training intervals. According to the present invention, the mobile communication network comprises at least a sensing function and a positioning function, wherein, as part of the sensing function, the mobile communication network comprises a sensing-capable or sensing-enabled entity or functionality, wherein the sensing-capable or sensing-enabled entity or functionality performs sensing by means of receiving radiofrequency sensing reception signals based on which information is able to be obtained about an area related to, or in the vicinity of, the sensing-capable sensing-enabled entity or functionality,
wherein, as part of the positioning function, the mobile communication network is able to provide location information regarding active objects of, or connected or related to or detectable by, the mobile communication network.
Furthermore, in order to provide at least one sensing-related service and/or in order to generate training and/or sensing model data, the method comprises the following steps:
-- in a first step, the sensing function performs sensing in an area related to, or in the vicinity of, the sensing-capable or sensing-enabled entity or functionality,
-- in a second step, the positioning function gathers location information regarding active objects in the area related to, or in the vicinity of, the sensing-capable or sensing-enabled entity or functionality,
-- in a third step, the sensing function receives the location information regarding the active objects and uses the location information to obtain ground truth data for labeling.

According to the present invention, it is advantageously possible and preferred that the positioning function is an integrated part of the mobile communication network, especially integrating mobile communication and positioning,
wherein especially, the mobile communication network is a mobile communication network implementing integrated communication and sensing or implementing joint communication and sensing.

It is thereby advantageously possible to easily and effectively implement the inventive method.

According to the present invention, it is furthermore advantageously possible and preferred that the at least one sensing-related service and/or the generation of training data and/or sensing model data is based on machine learning-based object detection, wherein such machine learning-based object detection uses the location information that the positioning function provides for active objects,
wherein especially, machine learning-based object detection is also performed for passive objects based on using the ground truth data for labelling active objects,
wherein especially the location information comprise object tracking information being provided to the sensing function.

It is thereby advantageously possible to easily and effectively implement the inventive method.

According to the present invention, it is furthermore advantageously possible and preferred that the mobile communication network comprises a radio support function, the radio support function gathers processed radio measurement information related to the active objects in the area related to, or in the vicinity of, the sensing-capable or sensing-enabled entity or functionality, wherein the sensing function receives the processed radio measurement information regarding the active objects and uses the processed radio measurement information to also obtain ground truth data for labeling during machine-learning model training.

It is thereby advantageously possible to easily and effectively implement the inventive method.

Furthermore, it is advantageously possible and preferred according to the present invention that the sensing function requests, from the positioning function, the location information regarding the active objects and/or requests, from the radio support function, the processed radio measurements.

It is thereby advantageously possible to easily and effectively implement the inventive method.

Especially, it is advantageously possible according to the present invention that the sensing-capable or sensing-enabled entity or functionality is a base station entity of the mobile communication network, and/or
wherein the active objects are, at least predominantly, user equipments of the mobile communication network and/or connected or related to the mobile communication network and/or detectable by the mobile communication network.

It is thereby advantageously possible to easily and effectively implement the inventive method.

Furthermore, it is advantageously possible and preferred according to the present invention that by means of the location information and/or by means of the processed radio measurement information, classification of the active objects is performed.

It is thereby advantageously possible to easily and effectively implement the inventive method.

Furthermore, the present invention relates to a system or to a mobile communication network for providing at least one sensing-related service and/or for generating training data and/or sensing model data as defined in claim 8.

Additionally, the present invention relates to a sensing-capable or sensing-enabled entity of a mobile communication network as defined in claim 9.

Additionally, the present invention relates to a program comprising a computer readable program code according to claim 10.

Additionally, the present invention relates to a computer-readable medium comprising instructions according to claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically and exemplarily illustrates a telecommunications network, especially using 3GPP architecture, used for obtaining positioning information.
Figure 2 schematically and exemplarily illustrates a telecommunications network, especially using 5G or 6G architecture, employed for sensing, in accordance with the present invention.
Figure 3 schematically and exemplarily illustrates a telecommunications network, especially using 5G or 6G architecture, with connected detection function embedded in a ICaS/JCaS Radio Access Network (RAN), in accordance with the present invention.
Figure 4 schematically and exemplarily illustrates a telecommunications network, especially using 5G or 6G architecture, with connected detection function embedded in a ICaS/JCaS core, in accordance with the present invention.
Figure 5 schematically and exemplarily illustrates an overview of an interaction between a positioning function and a sensing function, in accordance with the present invention.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

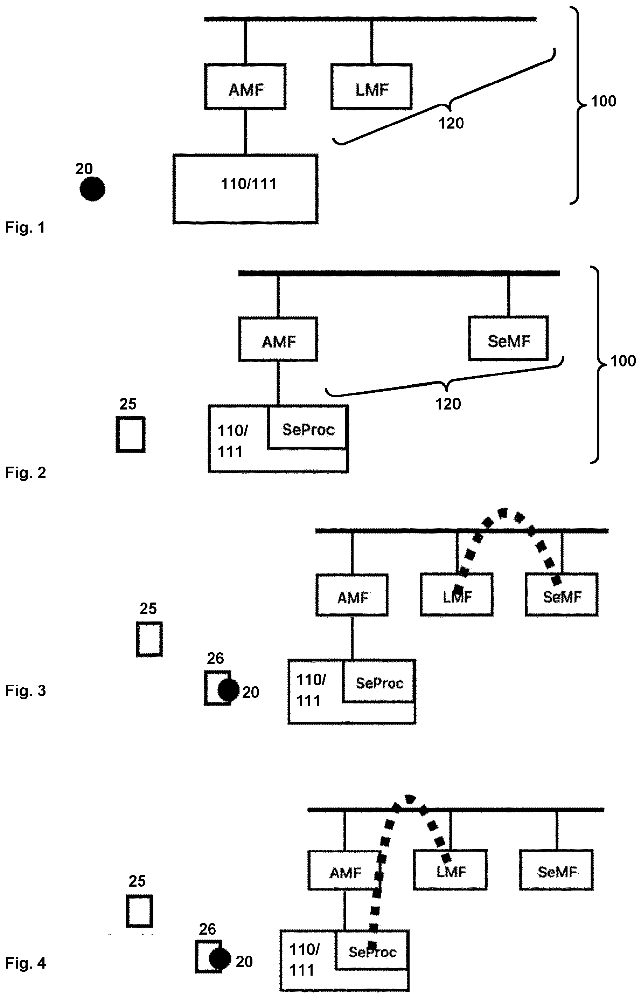

Figure 1 schematically and exemplarily illustrates a telecommunications network 100, especially using 3GPP architecture, used for obtaining positioning information which is basically known in the art.

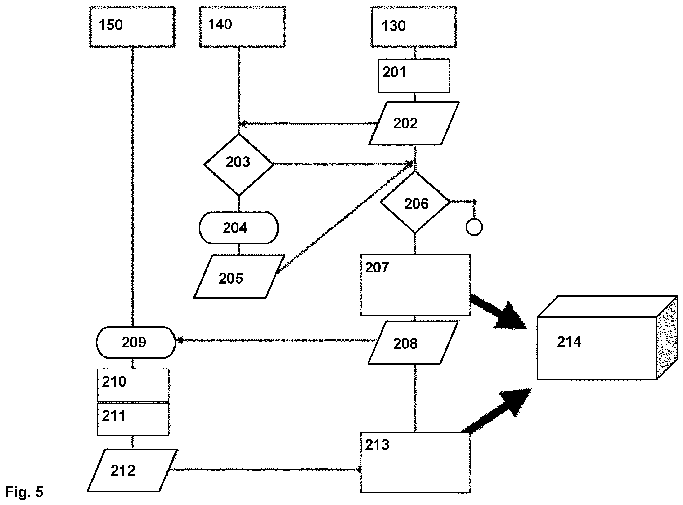

Specifically, the figure illustrates a portion of the telecommunications network 100 or mobile communication network 100 comprising an application management function (AMF) in connection with a location management function (LMF). The LMF is an exemplary means capable of carrying out a positioning function 140 (cf. Figure 5). The access and mobility management function AMF is capable of interacting with either a radio access network 110 or with a sensing-capable or sensing-enabled entity or functionality 111, typically (but not exclusively) a base station entity 111 of the radio access network 110. A user equipment 20 may be placed in a vicinity of the base station entity 111 or within coverage by the radio access network 110, i.e. of the mobile communication network 100. The location management function LMF exemplarily carries out the positioning function by employing radio frequency signals that reflect back from the user equipment 20, signal that is processed to derive the current location of the user equipment 20. Of course, other means and methods to employ positioning function 140 to detect the position of user equipment 20 are known in the art.

Figure 2 schematically and exemplarily illustrates the telecommunications network 100, especially using 5G or 6G architecture, employed for sensing, in accordance with the present invention. The telecommunications network 100 (or mobile communication network 100) comprises, besides the radio access network 110 also a core network 120.
Specifically, Figure 2 illustrates a portion of the mobile communication network 100 comprising the application management function AMF in connection with the sensing management function module SeMF. The access and mobility management function AMF is capable of interacting with either the radio access network 110 or with a sensing-processing entity or functionality (SeProc), comprised by the radio access network 110. A passive object 25 is illustrated as being present in the vicinity of the mobile communication network 100 - or, rather, in the coverage area thereof, i.e. in the vicinity of the base station entity 111 and/or the radio access network 110. The sensing management function SeMF and the sensing processing entity or functionality SeProc are exemplary means capable of carrying out at least a sensing function 130 (cf. Figure 5).
The sensing-capable or sensing-enabled entity or functionality 111 of the radio access network 110 performs sensing by receiving radiofrequency sensing reception signals, based on information obtained about an area related to, or in the vicinity of, the sensing-capable sensing-enabled entity or functionality 111.

The positioning function 140 (or means capable of carrying out the positioning function 140) are capable of providing location information regarding user equipment 20 and/or active objects 26 (cf. Figure 3) that might be connected (or otherwise associated) to user equipments 20, or connected or related to or detectable by the mobile communication network 100.

The architectures illustrated in Figures 1 and 2, both rely on positioning and sensing functions performed in the radio access network 110 of the telecommunications network 100 and/or performed in the core network 120 of the telecommunications network 100. In the case of the architecture illustrated in figure 2, object detection machine learning can be supplementarily applied either close to an underlaying physical radio system, placed underlying the mobile communication network 100 or in the core network. By providing mobile positioning information in a direct manner to the machine learning functions, especially during artificial intelligence/machine-learning model training and re-training, sensing detection can make use of this ground truth data during network operations.

Figure 3 illustrates an architecture with connected detection function embedded in a ICaS/JCaS radio access network 110, in accordance with the present invention.

Figure 3 illustrates the mobile communication network 100 comprising the application management function AMF in connection with the location management function LMF and in connection with the sensing management function SeMF. In the architecture illustrated in Figure 3, both the location management function LMF and the sensing management function SeMF are integrated in the telecommunications network 100. The access and mobility management function AMF module is capable of interacting with either the ICaS/JCaS radio access network 110 or with its integrated sensing-processing entity or functionality SeProc, comprised by the radio access network 110. Besides the user equipment 20 (if applicable associated with an active object 26), a passive object 25 is placed in the vicinity of the radio access network 110, especially a base station entity 111 serving as sensing-capable or sensing-enabled entity or functionality, i.e. in the vicinity of the mobile communication network 100. In this network architecture, a direct data exchange link is present between the location management function LMF and the sensing management function SeMF.

Figure 4 schematically and exemplarily illustrates the telecommunications network 100, especially using 5G or 6G architecture, with connected detection function embedded in a ICaS/JCaS core, in accordance with the present invention.
The architecture of Figure 4 corresponds to the architecture of Figure 3, with the distinction that a direct link is available between the location management function LMF (in the core network 120) and the sensing processing entity or functionality SeProc present in the radio access network 110, i.e. typically associated with the sensing-capable or sensing-enabled entity or functionality 111.

Machine learning is possible for the architectures proposed in Figures 3 and 4. Location labels for the active mobile devices 26 that are in a mobile radio coverage area are available. Sensing measurements are also available to the machine learning algorithms, consisting of data that especially covers the active objects 26 and preferably also the passive objects 25. As such, state of the art machine learning /deep learning techniques can be applied the ICaS/JCaS sensing, concerning at least learning detection and localization of passive objects.

The architecture illustrated in Figure 3 also enables the classification of objects by the direct link between the sensing management function SeMF, supporting sensing functions, and the location management function LMF, supporting communication functions of a ICaS/JCaS system. The International Mobile Equipment Identity numbers (IMEI) that identify the user equipment 20 may be used for this purpose. Classification is performed by means of the location information and/or by means of the processed radio measurement information.

Sensing data and positioning data are time-aligned in accordance with the solution provided by the present invention, so that a clear assignment of ground truth and current sensing information is possible. Such alignment is especially realized by means of employing time stamps or time information for the "sensing measurements" and the "positioning measurements".

Exemplarily, in a practical scenario in which the mobile object 26 is a car, and a user equipment 20 is situated in the car, such as in possession of a passenger in the car, with the aid of the mobile modules embedded in the car, the object class "car" may be derived. From other device types, such as smart phones, exemplarily the object class of "human", "pedestrian", "cyclist" may be derived. The "human" category (that is located in the car) may be separated from the "car" category based on signal strength measurements also available in the communication segment of an ICaS/JCaS system.

Based on the means elaborated upon above, the present invention proposes a method for providing at least one sensing-related service and/or for generating training data and/or sensing model data by means of processing sensing-related data generated within or as part of a mobile communication network 100. This method will be explained in detail in the following, while relying upon the illustration of Figure 5.

Figure 5 schematically and exemplarily illustrates an overview of an interaction between the positioning function 140 and the sensing function 130, in accordance with the present invention.

As mentioned above, the mobile communication network 100 comprises at least means capable of carrying out at least the sensing function 130 as well as means capable of carrying out the positioning function 140. Furthermore, the mobile communication network 100 comprises means capable of carrying out radio-support functions 150. Such radio-support means, or radio-support function 150 may be either integrated into, or accessible by and in communication with the mobile communication network 100. Alternatively, these means gather processed radio measurement information - especially related to the active objects 20, 26 - in the area related to, or in the vicinity of, the sensing-capable or sensing-enabled entity or functionality 111. The sensing function 130 comprise at least the sensing-capable or sensing-enabled entity or functionality 111. The sensing-capable or sensing-enabled entity or functionality 111 performs sensing by means of receiving radiofrequency sensing reception signals based on information obtained about an area related to, or in the vicinity of, the sensing-capable sensing-enabled entity or functionality 111.

The sensing function 130 also perform sensing in an area related to, or in the vicinity of, the sensing-capable or sensing-enabled entity or functionality 111. Further, these means are capable of receiving the location information regarding at least the active objects 20, 26 but also, at least in part, information about passive objects, and using the location information to obtain ground truth data for labeling. The abilities of the sensing function 130 and the positioning function 140 will be explained in detail with the aid of the flow chart illustrated in Figure 5.

As illustrated in Figure 5, the sensing function 130 - especially comprising the sensing management function SeMF and/or the sensing processing entity or functionality SeProc - is capable, at processing step 201, of identifying objects in the sensing data, and, at processing step 202, of requesting information about any user equipment 20 (or active object 26) present in the sensing area, from the positioning function 140. When such requested information is available, the user equipment 20 may be identified via its IMSI number or other identifier information.
The positioning function 140 explores, at processing step 203, whether there is any user equipment in the area and issue either a positive or negative report. If no user equipment is present in the area from the perspective of the positioning function 140, this is reported, to the sensing function 130, and the flow of steps is continued to processing step 206. If there are user equipments recognized in the area from the perspective of the positioning function 140, the positioning functions 140 determines, in processing step 204, the corresponding user equipment identifier information, especially the IMSI numbers, and provides, in processing step 205, such identifier information of the user equipments as well as the location information (relating to the identified and located user equipment) to the sensing function 130 (prior or at or subsequent to processing step 206).
At processing step 206 - and especially in case that the response from the positioning function 140, at processing step 203, has been negative, i.e. no user equipment found -, the sensing function determines whether there are user equipments present in the area from its own perspective; if this is not the case (i.e. no user equipments in the area), the processing flow is concluded. On the other hand, if this is the case (i.e. there are user equipments in the area), corresponding location label information is stored (especially for a given sensing scenario, for example based on range-angle-doppler measurements) by the sensing function 130 in a detection and classification training database or repository 214.
Additionally, the sensing function 130 retrieves, at processing step 208, current radio information for the identified user equipments (i.e. typically based on the retrieved IMSI numbers) from the radio support function 150 (cf. processing step 209), responsible for identifying the user equipment. According to the present invention, there might be one such radio support functions 150 or more than one such radio support functions 150. The radio support function 150 provides, in processing step 210, gathering location information, especially radio measurements, and, in processing step 211, compiles the radio information with respect to the user equipment or user equipments (that the sensing function had requested at processing step 208).
At processing step 212, the radio support function 150 responds, to the sensing function 130, with the respective processed radio measurements, which are then, at processing step 213 (and by the sensing function 130) stored as labels for the object classification, again in the detection and classification training database or repository 214. This labeled data of the detection and classification training database or repository 214, consisting of at least localization and radio measurements for classification, is used by the sensing function 130 during a machine learning model training. Classification is performed by the positioning function 140 and/or by the sensing function 130 and/or by the radio support function 150.
Object tracking can be supported by IMSI information, and provided, especially in an anonymous form, to the sensing function 130 of an ICaS/JCaS system. It is thereby advantageously possible, according to the present invention, to assign single ground truth positioning measurements to a respective object.

The above-mentioned mobile communication network 100 may be a mobile communication network 100 capable of implementing integrated communication and sensing, or capable of implementing joint communication and sensing.

As stated above, the application of artificial intelligence and machine learning (Al/ML) to solve object sensing and other sensing tasks in ICaS and JCaS systems is a possible approach. In accordance with the solution provided by the present invention, ICaS/JCaS training data is made available, such as ground truth information on object location and classes. As such, the efficient application of these techniques is made possible.

The machine learning-based object detection uses the location information provided by the positioning function 140 for active objects 26, i.e. typically objects being associated with user equipments 20.

Also, in accordance with the present invention, the machine learning-based object detection is also able to be performed for passive objects 25 based on using the ground truth data for labelling active objects.
The positioning function 140 are capable of providing location information regarding user equipment 20 and active objects 26 of, or connected or related to or detectable by, the mobile communication network 100. The location information comprises object tracking information provided to the sensing function 130.

The sensing-capable or sensing-enabled entity or functionality 111 may exemplarily be a base station entity of the mobile communication network 100.

The active objects 20, 26 are, at least predominantly, user equipments of the mobile communication network 100 and/or equipment connected to or related to the mobile communication network 100 and/or detectable by the mobile communication network 100.

## Claims

1. Method for providing at least one sensing-related service and/or for generating training data and/or sensing model data by means of processing sensing-related data that is generated within or as part of a mobile communication network (100), wherein the mobile communication network (100) comprises at least a sensing function (130) and a network-side positioning function (140), wherein, as part of the sensing function (130), the mobile communication network (100) comprises a sensing-capable or sensing-enabled entity or functionality (111), wherein the sensing-capable or sensing-enabled entity or functionality (111) performs sensing by means of receiving radiofrequency sensing reception signals based on which information is able to be obtained about an area related to, or in the vicinity of, the sensing-capable sensing-enabled entity or functionality (111),
wherein, as part of the network-side positioning function (140), the mobile communication network (100) is able to provide location information regarding active objects (20) of, or connected to or detectable by, the mobile communication network (100),
wherein, in order to provide at least one sensing-related service and/or in order to generate training and/or sensing model data, the method comprises the following steps:
-- in a first step, the sensing function (130) performs sensing in an area related to, or in the vicinity of, the sensing-capable or sensing-enabled entity or functionality (111),
-- in a second step, the network-side positioning function (140) gathers location information regarding active objects (20) in the area related to, or in the vicinity of, the sensing-capable or sensing-enabled entity or functionality (111),
-- in a third step, the sensing function (130) receives the location information regarding the active objects (20) and uses the location information to obtain ground truth data for labeling the active objects (20).

2. Method according to claim 1, wherein the network-side positioning function (140) is an integrated part of the mobile communication network (100), especially integrating mobile communication and positioning,
wherein especially, the mobile communication network (100) is a mobile communication network (100) implementing integrated communication and sensing or implementing joint communication and sensing.

3. Method according to one of the preceding claims, wherein the at least one sensing-related service and/or the generation of training data and/or sensing model data is based on machine learning-based object detection, wherein such machine learning-based object detection uses the location information that the network-side positioning function (140) provides for active objects (20),
wherein especially, machine learning-based object detection is also performed for passive objects (25, 26) based on using the ground truth data for labelling active objects (20),
wherein especially the location information comprise object tracking information being provided to the sensing function (130).

4. Method according to one of the preceding claims, wherein the mobile communication network (100) comprises a radio support function (150), the radio support function (150) gathers processed radio measurement information related to the active objects (20) in the area related to, or in the vicinity of, the sensing-capable or sensing-enabled entity or functionality (111), wherein the sensing function (130) receives the processed radio measurement information regarding the active objects (20) and uses the processed radio measurement information to also obtain ground truth data for labeling during machine-learning model training.

5. Method according to claim 4, wherein the sensing function requests, from the network-side positioning function (140), the location information regarding the active objects (20) and/or requests, from the radio support function (150), the processed radio measurements.

6. Method according to one of the preceding claims, wherein the sensing-capable or sensing-enabled entity or functionality (111) is a base station entity (111) of the mobile communication network (100), and/or
wherein the active objects (20) are, at least predominantly, user equipments of the mobile communication network (100) and/or connected to the mobile communication network (100) and/or detectable by the mobile communication network (100).

7. Method according to claims 4 or 5, wherein, by means of the location information and/or by means of the processed radio measurement information, classification of the active objects (20) is performed.

8. System or mobile communication network (100) for providing at least one sensing-related service and/or for generating training data and/or sensing model data by means of processing sensing-related data that is generated within or as part of a mobile communication network (100), wherein the mobile communication network (100) comprises at least a sensing function (130) and a network-side positioning function (140), wherein, as part of the sensing function (130), the mobile communication network (100) comprises a sensing-capable or sensing-enabled entity or functionality (111), wherein the sensing-capable or sensing-enabled entity or functionality (111) is configured to perform sensing by means of receiving radiofrequency sensing reception signals based on which information is able to be obtained about an area related to, or in the vicinity of, the sensing-capable sensing-enabled entity or functionality (111),
wherein, as part of the network-side positioning function (140), optionally as part of or involving a location management function, the mobile communication network (100) is able to provide location information regarding active objects (20) of, or connected to or detectable by, the mobile communication network (100),
wherein, in order to provide at least one sensing-related service and/or in order to generate training and/or sensing model data, the system or mobile communication network (100) is configured such that:
-- the sensing function (130) performs sensing in an area related to, or in the vicinity of, the sensing-capable or sensing-enabled entity or functionality (111),
-- the network-side positioning function (140) gathers location information regarding active objects (20) in the area related to, or in the vicinity of, the sensing-capable or sensing-enabled entity or functionality (111),
-- the sensing function (130) receives the location information regarding the active objects (20) and uses the location information to obtain ground truth data for labeling the active objects (20).

9. Sensing-capable or sensing-enabled entity (111) of a mobile communication network (100), optionally of a base station entity (111) of the mobile communication network (100), for providing at least one sensing-related service and/or for generating training data and/or sensing model data by means of processing sensing-related data that is generated within or as part of the mobile communication network (100) that comprises at least a sensing function (130) comprising the sensing-capable or sensing-enabled entity (111), and a network-side positioning function (140), wherein the sensing-capable or sensing-enabled entity (111) is configured to perform sensing by means of receiving radiofrequency sensing reception signals based on which information is able to be obtained about an area related to, or in the vicinity of, the sensing-capable sensing-enabled entity (111),
wherein the network-side positioning function (140) is able to provide location information regarding active objects (20) of, or connected to or detectable by, the mobile communication network (100),
wherein, in order to provide at least one sensing-related service and/or in order to generate training and/or sensing model data, the sensing-capable or sensing-enabled entity (111) is configured such that:
-- the sensing function (130) performs sensing in an area related to, or in the vicinity of, the sensing-capable or sensing-enabled entity (111),
-- the sensing function (130) receives from the network-side positioning function (140) location information regarding active objects (20) in the area related to, or in the vicinity of, the sensing-capable or sensing-enabled entity (111), and uses the location information to obtain ground truth data for labeling the active objects (20).

10. Program comprising a computer readable program code, which, when executed in part on a sensing-capable or sensing-enabled entity or sensing management function, and in part on a location management function, performs a method according to one of claims 1 to 7 implementing respectively the sensing function and the positioning function.

11. Computer-readable medium comprising instructions which when executed in part on a sensing-capable or sensing-enabled entity or sensing management function, and in part on a location management function, performs a method according to one of claims 1 to 7 implementing respectively the sensing function and the positioning function..

## Patentansprüche

1. Verfahren zur Bereitstellung mindestens eines sensing-bezogenen Dienstes und/oder zur Erzeugung von Trainingsdaten und/oder Sensing-Modelldaten mittels Verarbeitung sensing-bezogener Daten, die innerhalb oder als Teil eines Mobilkommunikationsnetzes (100) erzeugt werden, wobei das Mobilkommunikationsnetz (100) mindestens eine Sensing-Funktion (130) und eine netzseitige Positionierungsfunktion (140) umfasst, wobei das Mobilkommunikationsnetz (100) als Teil der Sensing-Funktion (130) eine sensing-fähige oder sensing-aktivierte Entität oder Funktionalität (111) umfasst, wobei die sensing-fähige oder sensing-aktivierte Entität oder Funktionalität (111) Sensing durchführt, indem sie Hochfrequenz-Sensing-Empfangssignale empfängt, anhand derer Informationen über ein Gebiet in Bezug auf oder in der Nähe der sensing-fähigen oder sensing-aktivierten Entität oder Funktionalität (111) gewonnen werden können,
wobei das Mobilkommunikationsnetz (100) als Teil der netzseitigen Positionierungsfunktion (140) in der Lage ist, Standortinformation bezüglich aktiver Objekte (20) des Mobilkommunikationsnetzes (100) oder von damit verbundenen oder durch dieses detektierbaren Objekten bereitzustellen,
wobei das Verfahren, um mindestens einen sensing-bezogenen Dienst bereitzustellen und/oder um Trainingsdaten und/oder Sensing-Modelldaten zu erzeugen, die folgenden Schritte umfasst:
- in einem ersten Schritt führt die Sensing-Funktion (130) Sensing in einem Gebiet in Bezug auf oder in der Nähe der sensing-fähigen oder sensing-aktivierten Entität oder Funktionalität (111) durch,
- in einem zweiten Schritt sammelt die netzseitige Positionierungsfunktion (140) Standortinformation bezüglich aktiver Objekte (20) in dem Gebiet in Bezug auf oder in der Nähe der sensing-fähigen oder sensing-aktivierten Entität oder Funktionalität (111),
- in einem dritten Schritt empfängt die Sensing-Funktion (130) die Standortinformation bezüglich der aktiven Objekte (20) und verwendet die Standortinformation, um Ground-Truth-Daten zur Beschriftung der aktiven Objekte (20) zu gewinnen.

2. Verfahren nach Anspruch 1, wobei die netzseitige Positionierungsfunktion (140) ein integrierter Bestandteil des Mobilkommunikationsnetzes (100) ist, insbesondere integrierte Kommunikation und Sensing oder gemeinsame Kommunikation und Sensing implementierend,
wobei insbesondere das Mobilkommunikationsnetz (100) ein Mobilkommunikationsnetz (100) ist, das integrierte Kommunikation und Sensing oder gemeinsame Kommunikation und Sensing implementiert.

3. Verfahren nach einem der vorstehenden Ansprüche, wobei der mindestens eine sensingbezogene Dienst und/oder die Erzeugung von Trainingsdaten und/oder Sensing-Modelldaten auf maschinenlernbasierter Objekterkennung basiert, wobei diese maschinenlernbasierte Objekterkennung die Standortinformation verwendet, die die netzseitige Positionierungsfunktion (140) für aktive Objekte (20) bereitstellt,
wobei insbesondere maschinenlernbasierte Objekterkennung auch für passive Objekte (25, 26) durchgeführt wird, indem die Ground-Truth-Daten zur Beschriftung aktiver Objekte (20) verwendet werden,
wobei insbesondere die Standortinformation Objektverfolgungsinformation umfasst, die der Sensing-Funktion (130) bereitgestellt wird.

4. Verfahren nach einem der vorstehenden Ansprüche, wobei das Mobilkommunikationsnetz (100) eine Radio-Support-Funktion (150) umfasst, wobei die Radio-Support-Funktion (150) verarbeitete Funkmessinformation bezüglich der aktiven Objekte (20) in dem Gebiet in Bezug auf oder in der Nähe der sensing-fähigen oder sensing-aktivierten Entität oder Funktionalität (111) sammelt, wobei die Sensing-Funktion (130) die verarbeitete Funkmessinformation bezüglich der aktiven Objekte (20) empfängt und die verarbeitete Funkmessinformation verwendet, um zusätzlich Ground-Truth-Daten zur Beschriftung während des Trainings des maschinellen Lernmodells zu gewinnen.

5. Verfahren nach Anspruch 4, wobei die Sensing-Funktion bei der netzseitigen Positionierungsfunktion (140) die Standortinformation bezüglich der aktiven Objekte (20) anfordert und/oder bei der Radio-Support-Funktion (150) die verarbeiteten Funkmessungen anfordert.

6. Verfahren nach einem der vorstehenden Ansprüche, wobei die sensing-fähige oder sensing-aktivierte Entität oder Funktionalität (111) eine Basisstationseinheit (111) des Mobilkommunikationsnetzes (100) ist, und/oder
wobei die aktiven Objekte (20) zumindest überwiegend Nutzergeräte des Mobilkommunikationsnetzes (100) sind und/oder mit dem Mobilkommunikationsnetz (100) verbunden sind und/oder durch das Mobilkommunikationsnetz (100) detektierbar sind.

7. Verfahren nach Anspruch 4 oder 5, wobei mittels der Standortinformation und/oder mittels der verarbeiteten Funkmessinformation eine Klassifikation der aktiven Objekte (20) durchgeführt wird.

8. System oder Mobilkommunikationsnetz (100) zur Bereitstellung mindestens eines sensing-bezogenen Dienstes und/oder zur Erzeugung von Trainingsdaten und/oder Sensing-Modelldaten mittels Verarbeitung sensing-bezogener Daten, die innerhalb oder als Teil eines Mobilkommunikationsnetzes (100) erzeugt werden, wobei das Mobilkommunikationsnetz (100) mindestens eine Sensing-Funktion (130) und eine netzseitige Positionierungsfunktion (140) umfasst, wobei das Mobilkommunikationsnetz (100) als Teil der Sensing-Funktion (130) eine sensing-fähige oder sensing-aktivierte Entität oder Funktionalität (111) umfasst, wobei die sensing-fähige oder sensing-aktivierte Entität oder Funktionalität (111) dazu ausgestaltet ist, Sensing durch Empfangen von Hochfrequenz-Sensing-Empfangssignalen durchzuführen, anhand derer Informationen über ein Gebiet in Bezug auf oder in der Nähe der sensing-fähigen oder sensing-aktivierten Entität oder Funktionalität (111) gewonnen werden können,
wobei das Mobilkommunikationsnetz (100) als Teil der netzseitigen Positionierungsfunktion (140), optional als Teil einer oder unter Einbeziehung einer Standortverwaltungsfunktion, in der Lage ist, Standortinformation bezüglich aktiver Objekte (20) des Mobilkommunikationsnetzes (100) oder von damit verbundenen oder durch dieses detektierbaren Objekten bereitzustellen,
wobei das System oder Mobilkommunikationsnetz (100), um mindestens einen sensing-bezogenen Dienst bereitzustellen und/oder um Trainingsdaten und/oder Sensing-Modelldaten zu erzeugen, derart ausgestaltet ist, dass:
- die Sensing-Funktion (130) Sensing in einem Gebiet in Bezug auf oder in der Nähe der sensing-fähigen oder sensing-aktivierten Entität oder Funktionalität (111) durchführt,
- die netzseitige Positionierungsfunktion (140) Standortinformation bezüglich aktiver Objekte (20) in dem Gebiet in Bezug auf oder in der Nähe der sensing-fähigen oder sensing-aktivierten Entität oder Funktionalität (111) sammelt,
- die Sensing-Funktion (130) die Standortinformation bezüglich der aktiven Objekte (20) empfängt und die Standortinformation verwendet, um Ground-Truth-Daten zur Beschriftung der aktiven Objekte (20) zu gewinnen.

9. Sensing-fähige oder sensing-aktivierte Entität (111) eines Mobilkommunikationsnetzes (100), optional einer Basisstationseinheit (111) des Mobilkommunikationsnetzes (100), zur Bereitstellung mindestens eines sensing-bezogenen Dienstes und/oder zur Erzeugung von Trainingsdaten und/oder Sensing-Modelldaten mittels Verarbeitung sensing-bezogener Daten, die innerhalb oder als Teil des Mobilkommunikationsnetzes (100) erzeugt werden, das mindestens eine Sensing-Funktion (130), die die sensing-fähige oder sensing-aktivierte Entität (111) umfasst, sowie eine netzseitige Positionierungsfunktion (140) umfasst, wobei die sensing-fähige oder sensing-aktivierte Entität (111) dazu ausgestaltet ist, Sensing durch Empfangen von Hochfrequenz-Sensing-Empfangssignalen durchzuführen, anhand derer Informationen über ein Gebiet in Bezug auf oder in der Nähe der sensing-fähigen oder sensing-aktivierten Entität (111) gewonnen werden können,
wobei die netzseitige Positionierungsfunktion (140) in der Lage ist, Standortinformation bezüglich aktiver Objekte (20) des Mobilkommunikationsnetzes (100) oder von damit verbundenen oder durch dieses detektierbaren Objekten bereitzustellen,
wobei die sensing-fähige oder sensing-aktivierte Entität (111), um mindestens einen sensing-bezogenen Dienst bereitzustellen und/oder um Trainingsdaten und/oder Sensing-Modelldaten zu erzeugen, derart ausgestaltet ist, dass:
- die Sensing-Funktion (130) Sensing in einem Gebiet in Bezug auf oder in der Nähe der sensing-fähigen oder sensing-aktivierten Entität (111) durchführt,
- die Sensing-Funktion (130) von der netzseitigen Positionierungsfunktion (140) Standortinformation bezüglich aktiver Objekte (20) in dem Gebiet in Bezug auf oder in der Nähe der sensing-fähigen oder sensing-aktivierten Entität (111) empfängt und die Standortinformation verwendet, um Ground-Truth-Daten zur Beschriftung der aktiven Objekte (20) zu gewinnen.

10. Programm, das einen computerlesbaren Programmcode umfasst, der, wenn er teilweise auf einer sensing-fähigen oder sensing-aktivierten Entität oder Sensing-Verwaltungsfunktion und teilweise auf einer Standortverwaltungsfunktion ausgeführt wird, ein Verfahren nach einem der Ansprüche 1 bis 7 ausführt, das jeweils die Sensing-Funktion und die netzseitige Positionierungsfunktion implementiert.

11. Computerlesbares Medium, das Anweisungen umfasst, die, wenn sie teilweise auf einer sensing-fähigen oder sensing-aktivierten Entität oder Sensing-Verwaltungsfunktion und teilweise auf einer Standortverwaltungsfunktion ausgeführt werden, ein Verfahren nach einem der Ansprüche 1 bis 7 ausführen, das jeweils die Sensing-Funktion und die netzseitige Positionierungsfunktion implementiert.

## Revendications

1. Procédé pour fournir au moins un service lié à la détection et/ou pour générer des données d'entraînement et/ou des données de modèle de détection au moyen du traitement de données liées à la détection générées à l'intérieur ou dans le cadre d'un réseau de communication mobile (100), dans lequel le réseau de communication mobile (100) comprend au moins une fonction de détection (130) et une fonction de positionnement côté réseau (140), dans lequel le réseau de communication mobile (100) comprend, en tant que partie de la fonction de détection (130), une entité ou fonctionnalité capable de détection ou activée pour la détection (111), dans lequel l'entité ou fonctionnalité capable de détection ou activée pour la détection (111) effectue la détection en recevant des signaux de réception de détection radiofréquence à partir desquels des informations sur une zone en rapport avec ou à proximité de l'entité ou fonctionnalité capable de détection ou activée pour la détection (111) peuvent être obtenues,
dans lequel le réseau de communication mobile (100), en tant que partie de la fonction de positionnement côté réseau (140), est apte à fournir des informations de localisation concernant des objets actifs (20) du réseau de communication mobile (100) ou des objets qui lui sont associés ou détectables par celui-ci,
dans lequel le procédé, pour fournir au moins un service lié à la détection et/ou pour générer des données d'entraînement et/ou des données de modèle de détection, comprend les étapes suivantes :
- dans une première étape, la fonction de détection (130) effectue la détection dans une zone en rapport avec ou à proximité de l'entité ou fonctionnalité capable de détection ou activée pour la détection (111),
- dans une deuxième étape, la fonction de positionnement côté réseau (140) collecte des informations de localisation concernant des objets actifs (20) dans la zone en rapport avec ou à proximité de l'entité ou fonctionnalité capable de détection ou activée pour la détection (111),
- dans une troisième étape, la fonction de détection (130) reçoit les informations de localisation concernant les objets actifs (20) et utilise les informations de localisation pour obtenir des données de vérité terrain pour l'étiquetage des objets actifs (20).

2. Procédé selon la revendication 1, dans lequel la fonction de positionnement côté réseau (140) est un composant intégré du réseau de communication mobile (100), mettant en œuvre notamment une communication et détection intégrées ou une communication et détection conjointes,
dans lequel, en particulier, le réseau de communication mobile (100) est un réseau de communication mobile (100) mettant en œuvre une communication et détection intégrées ou une communication et détection conjointes.

3. Procédé selon l'une des revendications précédentes, dans lequel l'au moins un service lié à la détection et/ou la génération de données d'entraînement et/ou de données de modèle de détection est basé sur une détection d'objets basée sur l'apprentissage automatique, dans lequel cette détection d'objets basée sur l'apprentissage automatique utilise les informations de localisation fournies par la fonction de positionnement côté réseau (140) pour les objets actifs (20),
dans lequel, en particulier, la détection d'objets basée sur l'apprentissage automatique est également effectuée pour des objets passifs (25, 26) en utilisant les données de vérité terrain pour l'étiquetage des objets actifs (20),
dans lequel, en particulier, les informations de localisation comprennent des informations de suivi d'objets fournies à la fonction de détection (130).

4. Procédé selon l'une des revendications précédentes, dans lequel le réseau de communication mobile (100) comprend une fonction de support radio (150), dans lequel la fonction de support radio (150) collecte des informations de mesure radio traitées concernant les objets actifs (20) dans la zone en rapport avec ou à proximité de l'entité ou fonctionnalité capable de détection ou activée pour la détection (111), dans lequel la fonction de détection (130) reçoit les informations de mesure radio traitées concernant les objets actifs (20) et utilise les informations de mesure radio traitées pour obtenir en outre des données de vérité terrain pour l'étiquetage lors de l'entraînement du modèle d'apprentissage automatique.

5. Procédé selon la revendication 4, dans lequel la fonction de détection demande à la fonction de positionnement côté réseau (140) les informations de localisation concernant les objets actifs (20) et/ou demande à la fonction de support radio (150) les mesures radio traitées.

6. Procédé selon l'une des revendications précédentes, dans lequel l'entité ou fonctionnalité capable de détection ou activée pour la détection (111) est une entité de station de base (111) du réseau de communication mobile (100), et/ou
dans lequel les objets actifs (20) sont au moins majoritairement des équipements utilisateur du réseau de communication mobile (100) et/ou sont connectés au réseau de communication mobile (100) et/ou sont détectables par le réseau de communication mobile (100).

7. Procédé selon la revendication 4 ou 5, dans lequel, au moyen des informations de localisation et/ou au moyen des informations de mesure radio traitées, une classification des objets actifs (20) est effectuée.

8. Système ou réseau de communication mobile (100) pour fournir au moins un service lié à la détection et/ou pour générer des données d'entraînement et/ou des données de modèle de détection au moyen du traitement de données liées à la détection générées à l'intérieur ou dans le cadre d'un réseau de communication mobile (100), dans lequel le réseau de communication mobile (100) comprend au moins une fonction de détection (130) et une fonction de positionnement côté réseau (140), dans lequel le réseau de communication mobile (100) comprend, en tant que partie de la fonction de détection (130), une entité ou fonctionnalité capable de détection ou activée pour la détection (111), dans lequel l'entité ou fonctionnalité capable de détection ou activée pour la détection (111) est configurée pour effectuer la détection en recevant des signaux de réception de détection radiofréquence à partir desquels des informations sur une zone en rapport avec ou à proximité de l'entité ou fonctionnalité capable de détection ou activée pour la détection (111) peuvent être obtenues,
dans lequel le réseau de communication mobile (100), en tant que partie de la fonction de positionnement côté réseau (140), facultativement en tant que partie d'une ou en faisant appel à une fonction de gestion de localisation, est apte à fournir des informations de localisation concernant des objets actifs (20) du réseau de communication mobile (100) ou des objets qui lui sont associés ou détectables par celui-ci,
dans lequel le système ou réseau de communication mobile (100), pour fournir au moins un service lié à la détection et/ou pour générer des données d'entraînement et/ou des données de modèle de détection, est configuré de telle sorte que :
- la fonction de détection (130) effectue la détection dans une zone en rapport avec ou à proximité de l'entité ou fonctionnalité capable de détection ou activée pour la détection (111),
- la fonction de positionnement côté réseau (140) collecte des informations de localisation concernant des objets actifs (20) dans la zone en rapport avec ou à proximité de l'entité ou fonctionnalité capable de détection ou activée pour la détection (111),
- la fonction de détection (130) reçoit les informations de localisation concernant les objets actifs (20) et utilise les informations de localisation pour obtenir des données de vérité terrain pour l'étiquetage des objets actifs (20).

9. Entité ou fonctionnalité capable de détection ou activée pour la détection (111) d'un réseau de communication mobile (100), facultativement d'une entité de station de base (111) du réseau de communication mobile (100), pour fournir au moins un service lié à la détection et/ou pour générer des données d'entraînement et/ou des données de modèle de détection au moyen du traitement de données liées à la détection générées à l'intérieur ou dans le cadre du réseau de communication mobile (100) comprenant au moins une fonction de détection (130) qui comprend l'entité ou fonctionnalité capable de détection ou activée pour la détection (111), ainsi qu'une fonction de positionnement côté réseau (140), dans lequel l'entité ou fonctionnalité capable de détection ou activée pour la détection (111) est configurée pour effectuer la détection en recevant des signaux de réception de détection radiofréquence à partir desquels des informations sur une zone en rapport avec ou à proximité de l'entité ou fonctionnalité capable de détection ou activée pour la détection (111) peuvent être obtenues,
dans lequel la fonction de positionnement côté réseau (140) est apte à fournir des informations de localisation concernant des objets actifs (20) du réseau de communication mobile (100) ou des objets qui lui sont associés ou détectables par celui-ci,
dans lequel l'entité ou fonctionnalité capable de détection ou activée pour la détection (111), pour fournir au moins un service lié à la détection et/ou pour générer des données d'entraînement et/ou des données de modèle de détection, est configurée de telle sorte que :
- la fonction de détection (130) effectue la détection dans une zone en rapport avec ou à proximité de l'entité ou fonctionnalité capable de détection ou activée pour la détection (111),
- la fonction de détection (130) reçoit, de la part de la fonction de positionnement côté réseau (140), des informations de localisation concernant des objets actifs (20) dans la zone en rapport avec ou à proximité de l'entité ou fonctionnalité capable de détection ou activée pour la détection (111) et utilise les informations de localisation pour obtenir des données de vérité terrain pour l'étiquetage des objets actifs (20).

10. Programme comprenant un code programme lisible par ordinateur qui, lorsqu'il est exécuté en partie sur une entité ou fonctionnalité capable de détection ou activée pour la détection ou une fonction de gestion de détection et en partie sur une fonction de gestion de localisation, exécute un procédé selon l'une des revendications 1 à 7 mettant en œuvre respectivement la fonction de détection et la fonction de positionnement côté réseau.

11. Support lisible par ordinateur comprenant des instructions qui, lorsqu'elles sont exécutées en partie sur une entité ou fonctionnalité capable de détection ou activée pour la détection ou une fonction de gestion de détection et en partie sur une fonction de gestion de localisation, exécutent un procédé selon l'une des revendications 1 à 7 mettant en œuvre respectivement la fonction de détection et la fonction de positionnement côté réseau.
